# EUROPÄISCHE PATENTSCHRIFT

(11) **EP 1 295 746 B1**
(45) Veröffentlichungstag und Bekanntmachung des Hinweises auf die Patenterteilung: **05.09.2007**
(21) Anmeldenummer: 02015897.8
(22) Anmeldetag: 17.07.2002
(51) Int. Cl.: B60J 7/10, B60J 7/185

(54) **Verschluss zum lösbaren Verbinden eines Hardtops mit einer Karosserie eines Fahrzeugs**
Lock for the detachable connection of a hardtop with a body of a vehicle
Verrouillage de liaison détachable d'une toit rigide avec une carrosserie de véhicule

(30) Priorität: 25.09.2001 DE 10147213
(43) Veröffentlichungstag der Anmeldung: 26.03.2003
(73) Patentinhaber: Dr.Ing. h.c. F. Porsche Aktiengesellschaft, 70435 Stuttgart (DE)
(72) Erfinder: Homann, Bodo, 71296 Heimsheim (DE)

(56) Entgegenhaltungen:
- EP-A- 0 897 822
- FR-A- 2 791 007
- GB-A- 2 307 715
- US-A- 5 186 516

## Beschreibung

Die Erfindung bezieht sich auf einen Verschluß zum lösbaren Verbinden eines Hardtops mit einer Karosserie eines Fahrzeugs über einen Steckzapfen nach dem Oberbegriff des Patentanspruchs 1.

Aus der gattungsbildenden DE 197 36 508 C2 ist ein Verschluß zum lösbaren Verbinden eines Hardtops mit einer Karosserie eines Fahrzeugs bekannt. Dieser Verschluß umfaßt einen mit einer Handhabe verbundenen Steckzapfen, der einen in einem Kulissenelement geführten Arretierzapfen sowie einen Anlagezapfen aufweist, der kopfseitig einer Hohlschraube in einer Quernut gehalten ist.

Aufgabe der Erfindung ist es, einen verbesserten Verschluß für ein Hardtop zu schaffen, der ein sicheres lösbares Verbinden des Hardtops mit einer Karosserie eines Fahrzeugs gewährleistet und darüber hinaus in Arbeitsstellung während der Fahrt frei von Geräuschen gehalten wird.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß durch die Führung des Steckzapfens auf einer definierten Führungsbahn während des Öffnens und Schließens des Hardtops eine gesicherte Öffnungsstellung einnimmt und von dieser Stellung der Steckzapfen in eine Schließstellung überführbar ist. Diese weist einen gewissen Freigang auf, so daß ein Kulissenzapfen in einem karosseriefesten Kulissenelement sicher und geräuschfrei in der Schließstellung gehalten wird. Dies wird insbesondere dadurch erzielt, indem der Steckzapfen kopfseitig einen querliegenden Haltezapfen aufweist, der auf stirnseitigen Führungsbahnen in der Aufnahmehülse in eine Öffnungs- und Schließstellung gegen die Spannung einer zwischen der Anlagescheibe und der Aufnahmehülse angeordneten Elastomerfeder verstellbar ist. Hierdurch wird in vorteilhafter Weise nach der Erfindung erreicht, daß einerseits durch die Elastomerfeder gegenüber einer Metallfeder nach dem Stand der Technik im Zusammenspiel mit den Verstellbewegungen des Steckzapfens Klappergeräusche vermieden werden. Hierzu trägt auch bei, daß nach der Erfindung der Steckzapfen einen Zapfenabschnitt mit einer ersten Absetzung aufweist, auf dem eine integrierte elastische Buchse angeordnet ist, welche sich am Zapfenendteil in einer zweiten Absetzung abstützt und sich etwa von der Anlagescheibe bis zum Querstift erstreckt. Hierdurch werden mögliche Toleranzen und somit Geräuschbildungen zwischen dem Steckzapfen und dem Kulissenelement beim Schließvorgang vermieden. Desweiteren weist die elastische Hülse an dem der Scheibe zugerichteten Ende eine Durchmesserverdickung gegenüber dem weiteren Außendurchmesser der Hülse auf. Diese Verdickung ist erforderlich, um die Anfasung bzw. die eingangsseitige Erweiterung der Bohrung im Kulissenelement im Schließvorgang auszufüllen.

Die stirnseitigen Führungsbahnen für den Haltestift in der Außenhülse bestehen aus im Kopf der Aufnahmehülse für den Haltezapfen gegenüberliegende halbkreisförmige Rastaufnahmen für eine Öffnungsstellung des Steckzapfens, an die sich Rampen anschließen, welche in wannenförmige Ausnehmungen übergehen, in welchen der Haltezapfen eine Schließ- bzw. Arretierstellung einnimmt. Durch diese Ausbildung der Führungsbahnen entsprechend dem Durchmesser des Haltezapfens ausgeführten halbkreisförmige Rastaufnahmen sowie der sich anschließenden Rampen mit einer definierten Längen und der nachfolgenden Ausnehmungen wird zum einen eine genaue Öffnungsstellung und eine am Ende der Führungsbahn mit definierter Länge im Kulissenelement eine Schließstellung erzielt.

Insbesondere ist nach der Erfindung vorgesehen, daß die halbkreisförmigen Rastaufnahmen von hochstehenden Stegen begrenzt sind und diese Rastaufnahmen etwa eine gleiche Tiefe aufweisen, wie die wannenförmigen Ausnehmungen, wobei die Rampen etwa die halbe Tiefe der Rastaufnahmen und der Ausnehmungen besitzen. Die hochstehenden Stege begrenzen endseitig zum einen die halbkreisförmigen Rastaufnahmen und zum anderen die wannenförmigen Ausnehmungen.

Die Rampen weisen ausgehend von den halbkreisförmigen Rastaufnahmen anschließende ebene Abschnitte auf, welche etwa der halben Tiefe der Rastaufnahmen entsprechen, die zu den wannenförmigen Ausnehmungen abfallende schrägverlaufende Flächen besitzen. Durch die Ausbildung der Rampen wird von der Schließstellung zur Öffnungsstellung hin ein leichteres Verdrehen des Steckzapfens und somit der Betätigung des Verschlusses möglich.

Das Verschwenken des Steckzapfens erfolgt entlang der schraubenförmigen Führungsbahn im ortsfesten Kulissenelement, wobei der Steckzapfen über die geräuschmindernde und Toleranzen ausgleichende elastische Hülse in der Bohrung des Kulissenelements geführt wird.

Eine Betätigung des Steckzapfens des Verschlusses zum Verdrehen erfolgt beispielsweise über ein Handhabungswerkzeug, wie einem Außensechskantschlüssel, der in einen Innensechskant des Steckzapfens eingreift.

Ein Ausführungsbeispiel der Erfindung ist in den Zeichnungen dargestellt und wird im folgenden näher beschrieben.

Es zeigen:

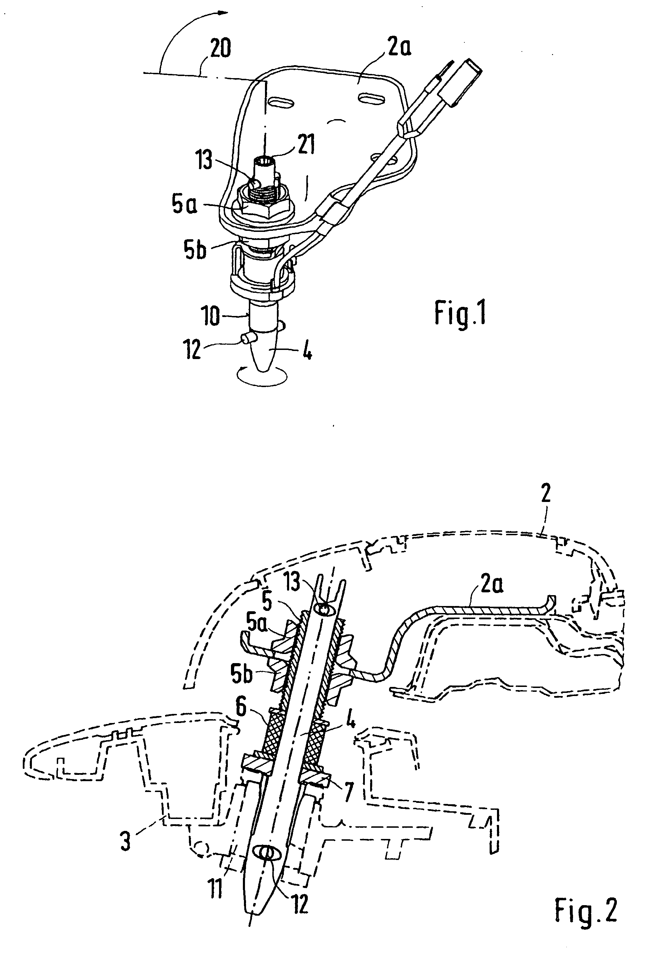

- Fig. 1: eine schaubildliche Ansicht auf den Verschluß für ein Hardtop,
- Fig. 2: einen Schnitt durch den Verschluß im Einbauzustand und in Schließstellung im ortsfesten Kulissenelement der Karosserie,

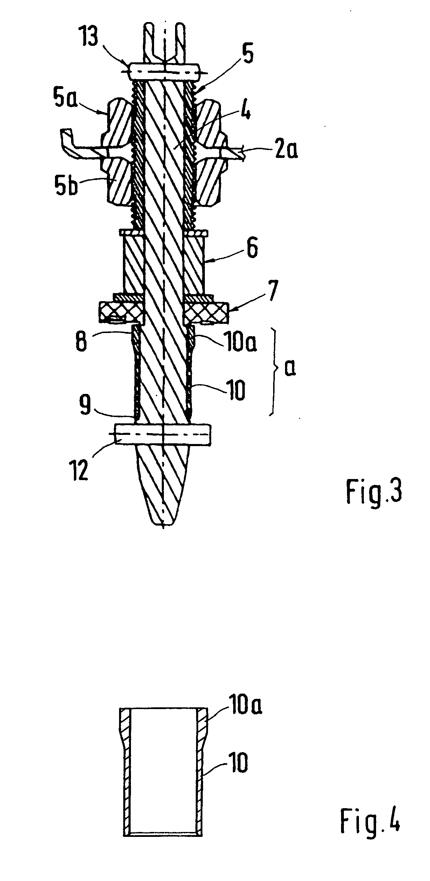

- Fig. 3: einen Schnitt durch den Verschluß in vergrößerter Darstellung,
- Fig. 4: einen Schnitt durch eine elastische Hülse des Steckzapfens,
- Fig. 5: einen Schnitt durch eine vergrößert dargestellte Aufnahmehülse mit stirnseitigen Führungsbahnen,
- Fig. 6: eine Abwicklung der Führungsbahnen in der Aufnahmehülse und
- Fig. 7: eine Draufsicht auf die Aufnahmehülse in Pfeilrichtung Z gesehen.

Ein Verschluß 1 zum lösbaren Verbinden eines Hardtops 2, 2a mit einer Karosserie 3 eines Fahrzeugs umfaßt im wesentlichen einen Steckzapfen 4. Dieser ist in einer mit dem Hardtop 2, 2a über Schraubmuttern 5a, 5b festverbundenen Aufnahmehülse 5 verdrehbar angeordnet. Zwischen der Aufnahmehülse 5 und einer am Steckzapfen 4 festgelegten Anlagescheibe 7 ist eine Elastomerfeder 6 angeordnet.

Der Steckzapfen 4 weist zur Abstützung der Anlagescheibe 7 eine erste Absetzung 8 auf und hierzu ist im Abstand a eine zweite Absetzung 9 am Zapfen 4 vorgesehen, an der sich eine elastische Hülse 10 abstützt, die sich bis zur ersten Absetzung 8 des Steckzapfens 4 erstreckt.

Zum Festlegen des Hardtops 2 an der Karosserie 3 des Fahrzeugs wird der Steckzapfen 4 in ein karosserieseitiges Kulissenelement 11 geschoben, das eine schraubenförmige Führungsbahn (nicht gezeigt) besitzt, in die ein quer angeordneter Kulissenzapfen 12 des Steckzapfens 4 eingreift. Gleichgerichtet und quer angeordnet ist im Kopf des Steckzapfens 4 ein Haltezapfen 13 vorgesehen, der unter der Spannung der Elastomerfeder 6 in Führungsbahnen 15, 16, 17 in eine Öffnungsstellung I und Schließstellung II geführt wird.

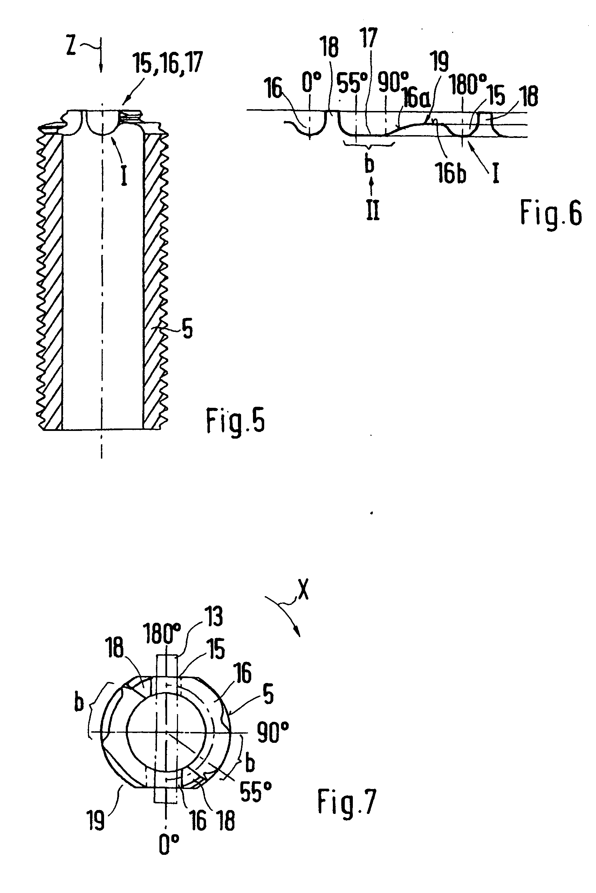

Die Führungsbahnen 15, 16, 17 sind in Fig. 6 in einer Abwicklung näher dargestellt, wobei zur Aufnahme des Haltezapfens 13 halbkreisförmige Rastaufnahmen bei 0 und 180° vorgesehen sind, d.h., die beiden freien Enden des Haltezapfens 13 sind, wie in Fig. 7 näher dargestellt, jeweils in der Rastaufnahme 15 und 16 in der Öffnungsstellung I gehalten. Beim Verdrehen des Haltezapfens 13 in Pfeilrichtung X zur Einnahme der Schließstellung II überwindet der Zapfen 13 Rampen 16 und fällt dann unter der Spannung der Elastomerfeder 6 in wannenförmige Ausnehmungen 17, die eine Länge b aufweisen. Diese Länge b ist erforderlich, um ein Einrasten in die endseitige Aufnahme der Führungsbahn im Kulissenelement 11 zu gewährleisten, welche auch eine gewisse Länge aufweist. Die zwischenliegenden Rampen 16 sind etwa halb so hoch wie die Ausnehmungen 17 und die Rastaufnahmen 15 ausgehend von den Ausnehmungen 17 weisen die Rampen mit etwa schräg abfallend verlaufenden Führungsflächen 16a auf, die in ebene Führungsflächen 16 b übergehen und dann in die Rastausnehmungen 15 abfallen. Die Rastausnehmungen 14, 15 jeder Seite weisen eine Begrenzung durch einen hochstehenden Steg 18 auf.

Ein Betätigen des Verschlusses erfolgt über ein Handhabungswerkzeug 20, welches ein Außensechskant aufweist, das in einen Innensechskant 21 des Steckzapfens 4 einführbar ist. Durch Verdrehen des Werkzeugs 20 wird der Steckzapfen 4 entsprechend in die Stellungen I und II verschwenkt.

## Patentansprüche

1. Verschluss zum lösbaren Verbinden eines Hardtops (2, 2a) mit einer Karosserie (3) eines Fahrzeugs über einen Steckzapfen (4), der in einer ortsfesten am Hardtop (2, 2a) befestigten Aufnahmehülse (5) verdrehbar gehalten, wobei zwischen der Hülse (5) und einer Anlagescheibe (7), welche auf dem Steckzapfen (4) angeordnet ist, ein Federelement (6) vorgesehen ist, wobei der Steckzapfen (4) endseitig einen Haltezapfen (12) aufweist, der in einer schraubenförmigen Führungsbahn eines ortsfesten Kulissenelements (11) der Karosserie eingeführt arretierbar ist und der Steckzapfen (4) kopfseitig einen querliegenden Haltezapfen (13) aufweist, der auf den stirnseitigen Führungsbahnen (15, 16, 17) in der Aufnahmehülse (5) in eine Öffnungs- und Schließstellung (I, II) gegen die Spannung einer zwischen der Anlagescheibe (7) und der Aufnahmehülse (5) angeordneten elastischen Federelement (6) verstellbar ist, **dadurch gekennzeichnet, dass** die Führungsbahnen (15, 16, 17, 19) im Kopf der Aufnahmehülse (5) für die freien Enden des Haltezapfens (13) gegenüberliegende halbkreisförmige Rastaufnahmen (15, 16) für eine Öffnungsstellung (I) des Steckzapfens (4) aufweisen, an die sich jeweils die Rampen (19) anschließen, welche jeweils in wannenförmige Ausnehmungen (17) übergehen, in welche der Haltezapfen (13) mit seinen freien Enden eine Schließ- bzw. Arretierstellung (II) einnimmt..

2. Verschluss nach Anspruch 1, **dadurch gekennzeichnet, dass** die halbkreisförmigen Rastaufnahmen (15,16) jeweils von hochstehenden Stegen (18) begrenzt sind und die Rastaufnahmen (15, 16) eine gleiche Tiefe aufweisen, wie die wannenförmigen Ausnehmungen (17) und die Rampen (19) etwa die halbe Tiefe der Rastaufnahmen (15, 16) und der Ausnehmungen (17) besitzen.

3. Verschluss nach den Ansprüchen 1 oder 2, **dadurch gekennzeichnet, dass** die Rampen (19) ausgehend von den halbkreisförmigen Rastaufnahmen (15, 16) jeweils einen anschließenden ebenen Abschnitt (16b) aufweisen, welcher etwa der halben Tiefe der Rastaufnahmen (17) entspricht, die zur wannenförmigen Ausnehmung eine abfallende, schrägverlaufende Fläche (16a) besitzen.

4. Verschluss nach einem oder mehreren der vorhergehenden Ansprüche, **dadurch gekennzeichnet, dass** der Steckzapfen (4) eine erste und zweite Absetzung (8, 9) aufweist und auf der ersten Absetzung (8) die Anlagescheibe (7) gehalten ist und auf der zweiten Absetzung (9), welche sich am Zapfenendteil befindet, die elastische Hülse (10) abgestützt ist und diese eine Erstreckung etwa von der Anlagescheibe (7) bis zum Querstift aufweist.

5. Verschluss nach einem oder mehreren der vorhergehenden Ansprüche, **dadurch gekennzeichnet, dass** die elastische Hülse (10) an dem der Scheibe (7) zugerichteten Ende eine Durchmesserverdickung (10a) gegenüber dem weiteren Außendurchmesser der Hülse (10) aufweist.

6. Verschluss nach einem oder mehreren der vorhergehenden Ansprüche, **dadurch gekennzeichnet, dass** der Steckzapfen (4) im Kopf einen Innensechskant (21) aufweist, in den ein Außensechskant eines Handhabungswerkzeugs (20) zum Verdrehen des Steckzapfens (4) einsetzbar ist.

## Claims

1. A catch for detachably connecting a hardtop (2, 2a) to a body (3) of a vehicle by means of a plug-type pin (4) which is rotatably held in a stationary receiving sleeve (5) fixed to the hardtop (2, 2a), wherein a spring member (6) is provided between the sleeve (5) and a contact disc (7) arranged on the plug-type pin (4), wherein the plug-type pin (4) is provided at its bottom end with a holding pin (12) which is introduced into and lockable in a helical guideway of a stationary link member (11) of the body, and the plug-type pin (4) is provided on its head with a transversely extending holding pin (13) which, on the guideways (15, 16, 17) in the end of the receiving sleeve (5), is displaceable into an opening and closing position (I, II) against the tension of a resilient spring member (6) arranged between the contact disc (7) and the receiving sleeve (5), **characterised in that** the guideways (15, 16, 17, 19) in the head of the receiving sleeve (5) have opposing, semi-circular detents (15, 16) for the free ends of the holding pin (13) and for an opening position (I) of the plug-type pin (4), which detents (15, 16) are each adjoined by the ramps (19) which each merge into trough-shaped recesses (17) in which the free ends of the holding pin (13) adopt a closing or locking position (II).

2. A catch according to claim 1, **characterised in that** the semi-circular detents (15, 16) are each bounded by upright webs (18), and the detents (15, 16) are the same depth as the trough-shaped recesses (17), and the ramps (19) are approximately half the depth of the detents (15, 16) and the recesses (17).

3. A catch according to claim 1 or claim 2, **characterised in that** the ramps (19), starting from the semi-circular detents (15, 16), each have an adjoining flat portion (16b) which corresponds to approximately half the depth of the detents (17), which have a sloping, obliquely extending surface (16a) leading to the trough-shaped recess.

4. A catch according to one or more of the preceding claims, **characterised in that** the plug-type pin (4) has a first and a second shoulder (8, 9), and the contact disc (7) is held on the first shoulder (8) and the resilient sleeve (10) is supported on the second shoulder (9), which is located on the end part of the pin, and the resilient sleeve (10) extends approximately from the contact disc (7) to the transverse pin.

5. A catch according to one or more of the preceding claims, **characterised in that** the resilient sleeve (10) has, at its end facing the disc (7), a thicker diameter (10a) than the remaining outer diameter of the sleeve (10).

6. A catch according to one or more of the preceding claims, **characterised in that** the head of the plug-type pin (4) has a hexagonal socket (21), into which a hexagonal outer surface of a handling tool (20) for rotating the plug-type pin (4) is insertable.

## Revendications

1. Verrouillage de liaison détachable d'un toit rigide (2, 2a) avec une carrosserie (3) de véhicule par un tenon d'emboîtement (4) maintenu de manière à pouvoir tourner dans une douille de réception (5) fixée sur le toit rigide (2, 2a), un élément de ressort (6) étant prévu entre la douille (5) et une rondelle de butée (7), laquelle est placée sur le tenon d'emboîtement (4), ce tenon d'emboîtement (4) présentant sur une extrémité une cheville d'arrêt (12), qui peut être bloquée dans un chemin de guidage hélicoïdal d'un élément de coulisse (11) de la carrosserie et le tenon d'emboîtement (4) comprend côté tête une cheville d'arrêt (13) transversale sur les chemins de guidage (15, 16, 17) avant dans la douille de réception (5) réglable dans une position d'ouverture et de fermeture (I, II) contre la contrainte d'un élément de ressort (6) élastique placé entre la rondelle de butée (7) et la douille de réception (5), **caractérisé en ce que** les chemins de guidage (15, 16, 17, 19) présentent dans la tête de la douille de réception (5) pour les extrémités libres de la cheville d'arrêt (13) des réceptions d'encliquetage (15, 16) en demi-cercle opposées pour une position d'ouverture (I) du tenon d'emboîtement (4), sur lesquelles les rampes (19) se raccordent, lesquelles traversent respectivement des évidements (17) en forme de cuvette, dans lesquels la cheville d'arrêt (13) adopte une position d'ouverture ou de blocage (II) avec son extrémité libre.

2. Verrouillage selon la revendication 1, **caractérisé en ce que** les réceptions d'encliquetage (15, 16) en demi-cercle sont délimitées respectivement par des traverses (18) verticales et les réceptions d'encliquetage (15, 16) présentent une profondeur égale aux évidements en forme de cuvette (17) et les rampes (19) font environ la moitié de la profondeur des réceptions d'encliquetage (15, 16) et des évidements (17).

3. Verrouillage selon les revendications 1 ou 2, **caractérisé en ce que** les rampes (19) en partant des réceptions d'encliquetage (15, 16) en demi-cercle présentent respectivement une section (16b) plane de raccordement, laquelle correspond environ à la moitié des réceptions d'encliquetage (17), qui ont une face en biais descendante (16a) vers une réception en forme de cuvette.

4. Verrouillage selon l'une ou plusieurs des revendications précédentes, **caractérisé en ce que** le tenon d'emboîtement (4) présente des premier et deuxième retraits (8, 9), la rondelle de butée (7) est maintenue sur le premier retrait (8) et sur le deuxième retrait (9) qui se trouve sur la partie finale de la cheville, la douille élastique (10) est appuyée et celle-ci présente un prolongement environ de la rondelle de butée (7) à la tige transversale.

5. Verrouillage selon l'une ou plusieurs des revendications précédentes, **caractérisé en ce que** la douille élastique (10) sur l'extrémité orientée vers la rondelle (7) présente une épaisseur de diamètre (10a) par rapport à l'autre diamètre extérieur de la douille (10).

6. Verrouillage selon l'une ou plusieurs des revendications précédentes, **caractérisé en ce que** le tenon d'emboîtement (4) présente dans la tête un hexagone intérieur (21) dans lequel un hexagone extérieur d'un outil de manipulation (20) peut être inséré pour tourner le tenon d'emboîtement (4).
